# EUROPÄISCHE PATENTSCHRIFT

(11) **EP 0 628 462 B1**
(45) Veröffentlichungstag und Bekanntmachung des Hinweises auf die Patenterteilung: **18.06.1997**
(21) Anmeldenummer: 94250142.0
(22) Anmeldetag: 02.06.1994
(51) Int. Cl.: B61D 19/00, B60J 5/06, E05B 65/38, E05B 47/00

(54) **Schiebewand-Verschlussklappe mit Verriegelungseinrichtung, insbesondere für Hochgeschwindigkeitsgüterwagen**
Closeable sliding wall with locking device particularly for high speed freight wagon
Panneau coulissant de fermeture avec dispositif de verrouillage en particulier pour wagon de marchandises à haute vitesse

(30) Priorität: 11.06.1993 DE 4319984
(43) Veröffentlichungstag der Anmeldung: 14.12.1994
(73) Patentinhaber: INSTITUT FÜR SCHIENENFAHRZEUGE GmbH, D-12527 Berlin (DE)
(72) Erfinder: Marek, Hanko, Dr.-Ing., D-13053 Berlin (DE); Franke, Erwin, D-12587 Berlin (DE)
(74) Vertreter: Köhler, Reimund

(56) Entgegenhaltungen:
- AT-A- 315 903
- DE-A- 2 849 516
- FR-A- 433 334
- FR-A- 2 333 923
- US-A- 1 327 079

## Beschreibung

Die Erfindung betrifft eine Schiebewand mit Verschlußklappe, insbesondere für Hochgeschwindigkeitsgüterwagen gemäß dem Oberbegriff des Anspruches 1.

Im Hochgeschwindigkeitsbereich haben die bekannten Schiebewandwagen im wesentlichen nach außen offene untere Betätigungseinrichtungen mit all den damit verbundenen strömungsbedingten Nachteilen. Diese Nachteile werden mit der bekannten Schiebewand nach DE 2849516 C2 zum Teil dadurch abgebaut, daß eine durchgehende Laufschiene den Freiraum im Bereich des Langträgers um den Betrag der Laufschienenhöhe vermindert und die aerodynamisch ungünstigen Bauteile der Betätigungseinrichtung weitgehend verdeckt. Die Geometrie der Betätigungseinrichtung läßt jedoch ein weiteres Verschließen nicht zu. Der damit nur zum Teil verschlossene untere Bereich der Schiebewand ist den Witterungseinflüssen ausgesetzt und auch ein Schutz vor mechanischen Beschädigungen ist nicht gegeben.

Aufgabe der Erfindung ist es, eine Schiebewand mit Verschlußklappe, insbesondere für Hochgeschwindigkeitsgüterwagen zu schaffen, die im Bereich der unteren Betätigungseinrichtung strömungsgünstig ausgelegt ist, einen Schutz gegen Witterungseinflüsse und gegen Beschädigungen gewährleistet und zugleich den Rollenfuß der Schiebewand im geschlossenen Zustand der Wand entlastet.

Diese Aufgabe wird durch die Merkmale des kennzeichnenden Teils des Anspruchs gelöst.

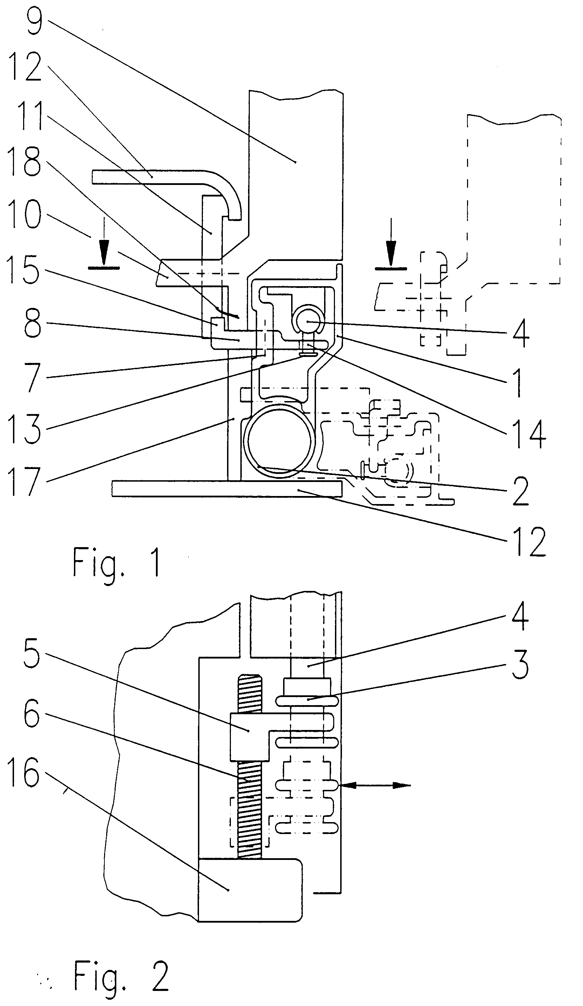

Ein Ausführungsbeispiel der Erfindung soll anhand der Zeichnung näher erläutert werden. Die Zeichnung zeigt in:
Fig.1: die Seitenansicht im Schnitt,
Fig.2: das Kopfstück in der Draufsicht.
Gemäß Fig.1 ist die Wand 9 im Bereich des Langträgers 12 in Geschlossenstellung und andeutungsweise in geöffnetem Zustand ohne Betätigungseinrichtung gezeigt. An einer auf dem Untergurt des Langträgers 12 nahezu aufliegenden und durchgehenden Hohlwelle 2 ist eine als Strangpreßprofil hergestellte Klappe 1 um 90° aus der Senkrechten heraus klappbar befestigt. Die Außenkontur der Klappe 1 ist der Wand 9 angepaßt und die Klappe 1 füllt im geschlossenen Zustand den unteren Freiraum zwischen Unterkante der Wand 9 und Untergurt des Langträgers 12 aus. Durch den oberen Hohlraum der Klappe 1 ist eine Zugstange 4 geführt, die jeweils an der Stirnseite des Wagens in eine Verschlußeinrichtung greift, die aus einem Spindelantrieb 16 mit Spindel 6, aus einer auf der Spindel 6 geführten Betätigungsgabel 5 besteht, wobei eine auf der Zugstange 4 befestigte Schaltmuffe 3 mit der Betätigungsgabel 5 korrespondiert. An der Innenseite der Klappe 1 ist ein Riegel 8 über den Zapfen 7 in der Horizontalen schwenkbar gelagert. An einem Ende des Riegels 8 ist ein senkrecht nach oben gerichteter Nocken 15 und an dem anderen Ende ist eine Bohrung 14 für die Aufnahme des an der Zugstange 4 befestigten Bolzen 13 vorgesehen. An dem Rollenfuß 10 ist eine in der Senkrechten Ebene drehbar gelagerte Klinke 11 vorgesehen, die mit ihrem unteren Teil mit dem Nocken 15 des Riegels 8 korrespondiert. An der Innenseite der Klappe 1 ist ein Klappenfuß 17 befestigt, der im senkrechten Zustand der Klappe 1 mit seinem unteren Steg auf dem Untergurt des Langträgers 12 aufliegt und mit seiner oberen Stirnfläche unter dem waagerechten Riegel 8 anliegt. Im geschlossenen Zustand der Wand 9 verschließt die senkrecht stehende Klappe 1 den unteren Bereich der Wand 9 bis Untergurt des Langträgers 12. Der Nocken 15 des Riegels 8 greift hinter den unteren Steg 18 der Wand 9 und verhindert ein Abklappen der Klappe 1. Der untere Teil der Klinke 11 liegt an dem Nocken 15 des Riegels 8 an, wobei die Klinke 11 senkrecht gestellt ist und mit ihrem oberen Teil hinter den gewölbt eingezogenen Obergurt des Langträgers 12 greift, so daß eine Bewegung der Wand 9 aus der Schließstellung heraus verhindert wird. In dieser gesicherten Schließstellung liegt der Riegel 8 zwischen dem unteren Steg 18 der Wand 9 und dem Klappenfuß 17, wobei der Klappenfuß 17 mit seinem unteren Ende auf dem Untergurt des Langträgers 12 aufliegt, und somit ruht die Last der Wand 9 in dieser Bauteilfolge auf dem Untergurt des Langträgers 12 und damit wird die in der Zeichnung nicht dargestellte Laufrolle des Rollenfußes 10 bzw. die Bauteile anderer Ausfahrmechanismen in der Geschlossenstellung der Wand 9 entlastet. Bei Betätigung des Spindelantriebes 16 wird über die Betätigungsgabel 5 die Schaltmuffe 3 und damit die Zugstange 4 in Richtung Wagenmitte geschoben und somit wird über Bolzen 13 der Riegel 8 in der Horizontalen um den Zapfen 7 gedreht, so daß der Riegel 8 aus der Schließstellung herausdreht, der Nocken 15 den Steg 18 der Wand 9 freigibt und damit die Klappe 1 abklappt. Durch die horizontale Bewegung des Riegels 8 wird zugleich über den Nocken 15 die Klinke 11 in der Vertikalen so verdreht, daß der obere Teil der Klinke 11 hinter dem gewölbten Obergurt des Langträgers 12 freidreht und somit die Wand 9 aus der Geschlossenstellung heraus bewegt werden kann. In dieser Offenstellung der Verriegelungseinrichtungen liegt die Wand 9 nicht mehr über Steg 18, Riegel 8 und Klappenfuß 17 auf dem Untergurt des Langträgers 12 auf und die Last der Wand 9 wird über Rollenfuß 10 und Laufrolle auf die Laufschiene übertragen.
Die Vorteile dieser Erfindung bestehen über die erreichte strömungsgünstige Form und über die günstige Entlastung der Ausfahrmechanismen hinaus auch darin, daß einfache und unkomplizierte Bauteile für die Betätigung der Verschlußklappe und für die Verriegelung verwendet werden und damit die Handhabung funktionell und sicher gestaltet wird.

### Aufstellung der verwendeten Bezugszeichen

- 1: Klappe
- 2: Hohlwelle
- 3: Schaltmuffe
- 4: Zugstange
- 5: Betätigungsgabel
- 6: Spindel
- 7: Zapfen
- 8: Riegel
- 9: Wand
- 10: Rollenfuß
- 11: Klinke
- 12: Langträger
- 13: Bolzen
- 14: Bohrung
- 15: Nocken
- 16: Spindelantrieb
- 17: Klappenfuß
- 18: Steg

## Patentansprüche

1. Schiebewand-Verschlußklappe mit Verriegelungseinrichtung, insbesondere für Hochgeschwindigkeitsgüterwagen, bei der der Rollenfuß (10) über Ausfahreinrichtungen aus dem Freiraum des Langträgers herausbewegt wird, wobei, auf dem Untergurt des Langträgers (12) eine durchgehende Hohlwelle (2) nahezu aufliegt und an der Hohlwelle (2) eine als Strangpreßprofil hergestellte Klappe (1) klappbar befestigt ist, dadurch gekennzeichnet, daß die Klappe im geschlossenen Zustand den unteren Freiraum zwischen Unterkante der Wand (9) und Untergurt des Langträgers (12) ausfüllt und der Außenkontur der Wand (9) angepaßt ist, daß in einem sich im oberen Teil der Klappe (1) befindenden Hohlraum eine Zugstange (4) der Verriegelungseinrichtung vorgesehen ist, die über Bolzen (13) einen horizontal schwenkbaren Riegel (8) mit Nocken (15) mit einer in der Vertikalen drehbaren Klinke (11) verbindet und daß der Nocken (15) in Geschlossenstellung der Wand (9) hinter einen unteren Steg (18) der Wand (9) und die Klinke (11) hinter den eingezogenen Obergurt des Langträgers (12) greift, und der Riegel (8) den Spalt zwischen Steg (18) und Klappenfuß (17) ausfüllt, wobei die Zugstange (4) am stirnseitigen Ende des Wagens über Schaltmuffe (3) in eine auf der Spindel (6) eines Spindelantriebes (16) angebrachte Betätigungsgabel (5) greift.

## Claims

1. Sliding-panel closure flap having a locking device, in particular for high-speed goods wagons, in which sliding-panel closure flap the roller foot (10) is moved out of the free space of the longitudinal member via extension devices, in which arrangement a continuous hollow shaft (2) virtually rests on the bottom chord of the longitudinal member (12), and a flap (1) made as an extruded section is fastened to the hollow shaft (2) in a hinged manner, characterized in that the flap, in the closed state, fills the bottom free space between bottom edge of the panel (9) and bottom chord of the longitudinal member (12) and is adapted to the outer contour of the panel (9), in that a tie rod (4) of the locking device is provided in a hollow space located in the upper part of the flap (1), which tie rod (4), via pins (13), connects a horizontally pivotable latch (8) having a dog (15) to a catch (11) rotatable in the vertical, and in that the dog (15), in the closed position of the panel (9), engages behind a lower web (18) of the panel (9) and the catch (11) engages behind the drawn-in top chord of the longitudinal member (12), and the latch (8) fills the gap between web (18) and flap foot (17), the tie rod (4), at the front end of the wagon, engaging via a control sleeve (3) in an actuating fork (5) attached to the spindle (6) of a spindle drive (16).

## Revendications

1. Volet de fermeture de paroi coulissante avec dispositif de verrouillage, en particulier pour wagon à marchandises à grande vitesse, dans le cas duquel le pied de roulement (10) est déplacé hors de la zone de dégagement de la longrine par des dispositifs de déplacement, un arbre creux continu (2) reposant pratiquement sur la membrure inférieure de la longrine (12) et un volet (1) se présentant sous la forme d'un profilé obtenu par filage étant fixé sur l'arbre creux (2) de manière à pouvoir être rabattu, caractérisé en ce que, à l'état fermé, le volet remplit la zone de dégagement inférieure entre le bord inférieur de la paroi (9) et la membrure inférieure de la longrine (12) et s'adapte au contour extérieur de la paroi (9), en ce que dans un espace creux ménagé dans la partie supérieure du volet (1) est prévue une barre de traction (4) du dispositif de verrouillage qui, par l'intermédiaire d'un doigt (13), relie un verrou (8) pouvant pivoter horizontalement et pourvu d'un mentonnet (15) à un cliquet (11) pouvant pivoter verticalement et en ce que le mentonnet (15), dans la position de fermeture de la paroi (9), est en prise avec l'arrière d'un talon inférieur (18) de la paroi (9) et le cliquet (11) est en prise avec l'arrière de la membrure supérieure de la longrine (12), et le verrou (8) remplit la fente entre le talon (18) et le pied (17) du volet, étant entendu que la barre de traction (4) est en prise à son extrémité d'about du wagon, par l'intermédiaire d'un manchon de manoeuvre (3) avec une fourchette d'actionnement montée sur la broche (6) d'un actionneur à vis (16).
